# FASCICULE DE BREVET EUROPEEN

(11) **EP 2 403 725 B1**
(45) Date de publication et mention de la délivrance du brevet: **28.08.2013**
(21) Numéro de dépôt: 10707498.1
(22) Date de dépôt: 01.03.2010
(51) Int. Cl.: B60C 15/024

(54) **PNEUMATIQUE POUR VEHICULE LOURD**
REIFEN FÜR SCHWERFAHRZEUG
TYRE FOR A HEAVY VEHICLE

(30) Priorité: 04.03.2009 FR 0951366
(43) Date de publication de la demande: 11.01.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: POTIER, Daniel, F-63118 Cebazat (FR)
(74) Mandataire: Le Cam, Stéphane Georges Elie
(86) Numéro de dépôt international: PCT/EP2010/052526
(87) Numéro de publication internationale: WO 2010/100102

(56) Documents cités:
- EP-A- 0 652 120
- EP-A- 0 982 158
- EP-A1- 0 749 855
- EP-A2- 0 958 946
- JP-A- 9 132 012
- US-A1- 2006 124 217
- US-A1- 2008 035 261

## Description

La présente invention concerne un pneumatique, destiné à équiper un véhicule ou engin lourd de type génie civil.

Bien que non limitée à ce type d'application, l'invention sera plus particulièrement décrite en référence à des pneumatiques pour véhicules de type minier travaillant dans des mines souterraines et présentant une largeur axiale supérieure ou égale à 25 pouces.

Ce type de véhicules présente la particularité de devoir transporter de lourdes charges et d'être réalisé avec un volume d'encombrement le plus réduit possible, les espaces de circulation étant limités en termes de volumes. Les pneumatiques utilisés sont ainsi les plus petits possibles et ne sont en conséquence pas idéalement adaptés aux couples qui doivent être transmis.

Concernant la conception habituelle des pneumatiques pour engin de génie civil, l'armature de carcasse radiale, ancrée dans chaque bourrelet par retournement autour d'une tringle, est composée d'au moins une couche d'éléments de renforcement métalliques, les dits éléments étant sensiblement parallèles entre eux dans la couche. L'armature de carcasse est habituellement surmontée d'une armature de sommet composée d'au moins deux couches de sommet de travail d'éléments de renforcement métalliques, mais croisés d'une couche à la suivante en faisant avec la direction circonférentielle des angles compris entre 15 et 70°. Entre l'armature de carcasse et les couches de sommet de travail, on peut trouver des couches d'éléments de renforcements, croisés d'une couche à la suivante et présentant des angles inférieures à 12°, la largeur de ces couches d'éléments de renforcement étant habituellement inférieure à celles des couches de travail. Radialement à l'extérieur des couches de travail, on trouve encore des couches de protection dont les éléments de renforcement présentent des angles compris entre 10 et 65°. L'armature de sommet est elle-même surmontée d'une bande de roulement.

On entend par « axiale », une direction parallèle à l'axe de rotation du pneumatique et par « radiale » une direction coupant l'axe de rotation du pneumatique et perpendiculaire à celui-ci. L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial ou plan médian circonférentiel est le plan circonférentiel passant par le centre ou sommet de la bande de roulement et qui divise le pneumatique en deux moitiés.

Un plan radial est un plan qui contient l'axe de rotation du pneumatique.

La direction longitudinale du pneumatique, ou direction circonférentielle, est la direction correspondant à la périphérie du pneumatique et définie par la direction de roulement du pneumatique.

Les tringles utilisées dans les pneumatiques peuvent être de deux types. Il existe tout d'abord des tringles de type « tressées » présentant une section sensiblement circulaire. Il existe par ailleurs des tringles-paquets formées de plusieurs couches de câbles empilées dont la section peut être de différentes formes.

Dans le cas des pneumatiques pour véhicules miniers décrits ci-dessus, on trouve habituellement des tringles-paquets présentant une section hexagonale. Les tringles de type paquets qui peuvent être réalisées avec un coût inférieur à celui des tringles de type « tressées » présentent le plus souvent une section hexagonale, celle-ci étant relativement proche d'un cercle et conduisant à un encombrement limité. Ces pneumatiques sont habituellement montés sur des roues comportant des jantes à site plat, c'est-à-dire que les surfaces de la jante sur lesquelles la base des bourrelets du pneumatique sont montés présente une pente de l'ordre de 5° par rapport à la direction axiale.

Les pneumatiques pour engins de génie civil, tels que décrits ci-dessus, sont habituellement soumis à une pression comprise entre 4 et 10 bars pour des charges et dimensions usuelles.

Au vu de leurs conditions d'utilisation et notamment du fait des charges transportées et par voie de conséquence des couples qui sont transmis par l'intermédiaire des pneumatiques, il apparaît que ces pneumatiques présentent des usures importantes au niveau des bourrelets, qui limitent la durée de vie de ces pneumatiques. En outre, ces usures si elles sont toujours importantes pour ce type de pneumatiques peuvent être relativement différentes d'un pneumatique à l'autre, tout au moins en termes de rapidité.
Par ailleurs, les documents EP-A-0749855 et EP-A-0958946 décrivent des pneumatiques ayant les caractéristiques techniques du préambule de la revendication 1.

L'inventeur s'est ainsi donné pour mission de fournir des pneumatiques pour véhicules miniers souterrains présentant des propriétés améliorées en terme d'usure et plus régulières d'un pneumatique à l'autre.

Ce but a été atteint selon l'invention par un pneumatique, tel que défini dans la revendication 1, pour véhicule lourd à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, chacun des bourrelets comportant une tringle permettant l'ancrage de l'armature de carcasse dans lesdits bourrelets par retournement de ladite au moins une couche d'éléments de renforcement autour des tringles, dans un plan radial, radialement à l'intérieur du point de ladite au moins une couche d'armature de carcasse radialement le plus à l'intérieur et axialement à l'extérieur du centre géométrique de la tringle, le rayon de courbure en un point de la surface extérieur du bourrelet étant supérieur au rayon de courbure au point de projection orthogonale dudit point de la surface extérieur du bourrelet sur ladite au moins une couche d'armature de carcasse.

Un tel pneumatique selon l'invention est plus particulièrement destiné à des pneumatiques présentant une largeur axiale supérieure ou égale à 25 pouces.

Le pneumatique ainsi décrit selon l'invention comporte un bourrelet dont la forme extérieure et notamment la partie venant au contact de la jante durant le montage présente un profil arrondi dont le rayon de courbure autorise une mise en place relativement aisé du pneumatique sur sa jante de montage. Comparé à la forme des bourrelets usuels, le rayon de courbure plus important de la surface extérieure de la partie du bourrelet glissant sur la jante lors du montage du pneumatique selon l'invention semble autoriser une mise en place plus aisée du pneumatique sur jante. En outre, le passage plus aisé du bourrelet sur la jante semble prévenir des risques de déformation dudit bourrelet lors du montage du pneumatique sur la jante pouvant conduire à une mauvaise assise du bourrelet sur le siège de jante ; de telles mauvaises assises des bourrelets sur les sièges de jante observées de manière aléatoire avec les pneumatiques usuels peuvent expliquer des vitesses d'usure très variables des bourrelets d'un pneumatique à l'autre.

Les essais réalisés avec des pneumatiques selon l'invention équipant des véhicules pour mines souterraines ont effectivement montré des performances des pneumatiques en termes d'usure supérieures à celles des pneumatiques usuels et en outre plus régulières d'un pneumatique à un autre.

L'inventeur pense interpréter ces résultats par une meilleure mise en place du pneumatique sur le siège de jante sans risque que les bourrelets du pneumatique soient déformés ou mal positionnés lors du montage et entraînant alors une usure rapide de cette zone du bourrelet. La déformation et/ou le mauvais positionnement du bourrelet variant d'un pneumatique à l'autre peuvent expliquer les vitesses d'usure variables entre les différents pneumatiques.

Selon un mode de réalisation préféré de l'invention, dans un plan radial, radialement à l'intérieur du point de la tringle radialement le plus à l'intérieur et axialement à l'extérieur du centre géométrique de la tringle, le rayon de courbure en un point de ladite au moins une couche d'armature de carcasse est inférieur au rayon de courbure au point de projection orthogonale dudit point de ladite au moins une couche d'armature de carcasse sur la surface extérieur du bourrelet.

Selon ce mode de réalisation de l'invention, la mise en place du bourrelet sur un siège de jante est encore facilitée et les risques de déformation du bourrelet sont encore moindres.

Selon l'invention, les tringles sont des tringles paquets, de préférence de forme hexagonale. De telles tringles assurent notamment un maintien satisfaisant de l'armature de carcasse durant les étapes de fabrication du pneumatique ainsi que durant l'étape de montage dudit pneumatique sur sa jante.

Selon l'invention, les tringles du pneumatique présentent un rapport de largeur axiale sur la hauteur radiale supérieure à 1.5. De telles tringles assurent une répartition de pression sur une plus grande largeur de la base du bourrelet. De telles tringles sont particulièrement bien adaptées à ce type de pneumatique dont les dimensions sont réduites par rapport au couple transmis, du fait de l'utilisation dans des mines souterraines. En effet, les dimensions des pneumatiques imposées par un tel usage conduisent à des pressions importantes exercées par les tringles sur la base des bourrelets pour assurer un passage de couple satisfaisant. Les pneumatiques usuels qui comportent des tringles de type paquet de forme hexagonale et de rapport de largeur sur la hauteur égal ou proche de 1 conduisent à une détérioration de la base des bourrelets du fait de pressions importantes sur de faibles largeurs. Des formes de tringles plus allongées selon la direction axiale telles que proposées selon cette variante de l'invention, vont effectivement permettre du fait de largeurs plus importantes de mieux répartir les efforts de pression entre le bourrelet et la jante de montage.

De telles tringles présentent encore l'avantage, du fait d'une meilleure répartition des pressions de simplifier le démontage des pneumatiques après usage.

Une diminution de l'intensité locale des contraintes exercées entre la base du bourrelet et la jante présente encore l'avantage d'augmenter la durée de vie des jantes. En effet, les solutions actuelles, du fait de contraintes locales élevées conduisent à une détérioration des jantes au niveau des zones d'appui des bourrelets.

Selon l'invention, sur au moins 30 mm de la base du bourrelet, l'angle formé par ladite base avec une direction parallèle à celle de l'axe de rotation du pneumatique est compris entre 6 et 7.5°. Une telle pente de la base du bourrelet favorise encore la simplification du montage du pneumatique sur une jante et limite encore les risques de mauvais positionnement du bourrelet sur la jante. En comparaison des pentes des pneumatiques usuels pour ce type d'application qui forment des angles avec une direction parallèle à celle de l'axe de rotation du pneumatique supérieurs à 8°, la pente de la base du bourrelet peut être diminuée sans nuire aux risques de rotation sur jante dès lors que la répartition de pression exercée par la tringle se fait sur une plus grande largeur de la base du bourrelet.

Des modes de réalisation avantageux de l'invention prévoient que l'épaisseur radiale de masse caoutchouteuse mesurée entre la tringle, de préférence radialement à l'intérieur du point de la tringle radialement le plus à l'intérieur, et la surface extérieure du bourrelet est supérieure à 10 mm. De telles épaisseurs favorisent encore des durées de vie améliorées du pneumatique.

Les pneumatiques ainsi réalisés selon l'invention ont encore montré des avantages en termes de masse. Il s'avère en effet que, malgré l'élargissement possible de la base du bourrelet, les pneumatiques selon l'invention présentent une masse inférieure à celle de pneumatiques usuels. Ce gain en masse s'explique notamment par le choix de tringles de forme aplatie par rapport à celle des tringles de pneumatiques usuels pour ce type d'application. En effet, la meilleure répartition des pressions sur la jante conduit à concevoir des tringles avec une quantité de métal inférieure à celle nécessaire pour les pneumatiques usuels pour un couple à transmettre donné.

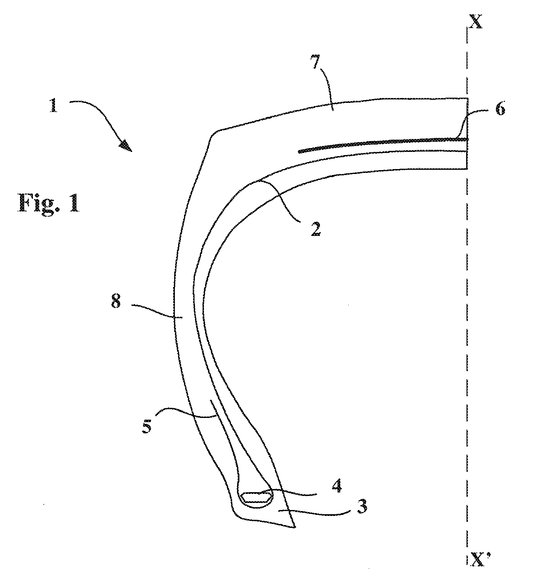

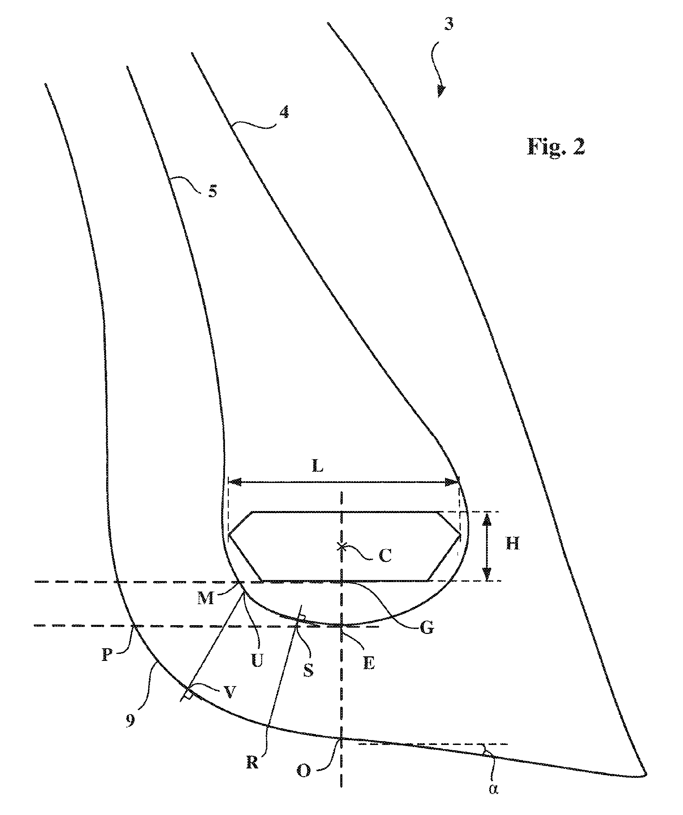

D'autres détails et caractéristiques avantageux de l'invention ressortiront ci-après de la description d'un exemple de réalisation de l'invention en référence aux figures 1 et 2 qui représentent :
- figure 1, une représentation schématique d'un pneumatique selon l'invention,
- figure 2, une représentation schématique d'un bourrelet du pneumatique de la figure 1.

Les figures ne sont pas représentées à l'échelle pour en simplifier la compréhension. La figure 1 ne représente que la moitié d'un pneumatique qui se prolonge de manière symétrique par rapport à l'axe XX' qui représente le plan médian circonférentiel dudit pneumatique.

La Figure 1 représente un schéma vu selon une coupe radiale d'un pneumatique 1 réalisé conformément à l'invention. Le pneumatique 1 de dimension 26.5R25 comporte une couche d'armature de carcasse 2, composée d'une nappe de câbles métalliques inextensibles en acier, ancrée dans chaque bourrelet 3 à une tringle 4 pour former un retournement 5. La couche d'armature de carcasse 2 est surmontée radialement d'une armature de sommet 6. Ladite armature de sommet 6 est habituellement constituée, d'une part de deux nappes dites de travail et d'autre part de deux nappes de protection. L'ensemble de ces nappes constituant l'armature de sommet n'est pas représenté dans le détail sur les figures. Les nappes de travail sont elles-mêmes constituées de câbles inextensibles en acier, parallèles entre eux dans chaque nappe, et croisés d'une nappe à la suivante en faisant avec la direction circonférentielle des angles pouvant être compris entre 15° et 40°. Les nappes de protection sont généralement constituées de câbles métalliques en acier élastiques, parallèles entre eux dans chaque nappe et croisés entre eux d'une nappe à la suivante en faisant des angles pouvant être compris entre 15 et 45°. Les câbles de la nappe de travail radialement extérieure sont usuellement croisés avec les câbles de la nappe de protection radialement intérieure. L'armature de sommet est enfin surmontée d'une bande de roulement 7 qui est réunie aux bourrelets 3 par les flancs 8.

La tringle 4 est de type paquet de forme hexagonale ; elle présente conformément à l'invention un rapport de la largeur axiale L (égale à 47 mm) sur la hauteur radiale H (égale à 15 mm) égal à 3.1 et donc supérieur à 1.5.

La figure 2 illustre une représentation schématique, selon une coupe radiale, d'un bourrelet 3 du pneumatique de la figure 1.

Conformément à l'invention, dans la zone de la surface extérieur 9 du bourrelet 3 délimitée par les points O et P, c'est-à-dire dans une zone de la surface extérieur 9 du bourrelet 3 radialement à l'intérieur du point E radialement le plus à l'intérieur de la couche d'armature de carcasse 2 et axialement à l'extérieur du centre géométrique C de la tringle 4, le rayon de courbure au point R de la surface extérieur 9 du bourrelet 3 est supérieur au rayon de courbure au point S de projection orthogonale dudit point R sur la couche d'armature de carcasse 2.

Au point R, le rayon de courbure de la surface extérieure 9 du bourrelet 3 est égal à 40 mm.

Au point S, le rayon de courbure de la couche d'armature de carcasse 2 est égal à 35 mm.

De la même façon, dans la zone de la couche d'armature de carcasse 2 délimitée par les points E et M, c'est-à-dire dans une zone de la couche d'armature de carcasse 2 radialement à l'intérieur du point G de la tringle radialement le plus à l'intérieur et axialement à l'extérieur du centre géométrique C de la tringle, le rayon de courbure au point U de la couche d'armature de carcasse 2 est inférieur au rayon de courbure au point V de projection orthogonale dudit point U sur la surface extérieure 9 du bourrelet 3.

Au point U, le rayon de courbure de la couche d'armature de carcasse 2 est égal à 20 mm.

Au point V, le rayon de courbure de la surface extérieure 9 du bourrelet 3 est égal à 40 mm.

Le pneumatique illustré sur les figures a été monté sur une jante de dimension 25 pouces et gonflé à une pression de 5.5 bars. Comparé au montage d'un pneumatique usuel, c'est-à-dire comportant une tringle dont le rapport de la largeur sur la hauteur est sensiblement égal à 1, le montage du pneumatique semble facilité. De même, après roulage sur un véhicule simulant une utilisation en mine souterraine en termes de charges transportées et de couple transmis, le démontage du pneumatique selon l'invention semble simplifié.

En outre, l'étanchéité notamment assurée par le contact entre la jante et la zone du bourrelet est satisfaisante et tout à fait comparable à celle d'un pneumatique usuel.

Des essais comparatifs ont été réalisés avec un pneumatique conforme à celui présenté sur les figures. La comparaison a été faite avec un pneumatique de référence identique comportant une tringle de type paquet dont le rapport de la largeur sur la hauteur est sensiblement égal à 1 et dont la largeur de la base du bourrelet est bien entendu inférieur.

La largeur de la base du bourrelet du pneumatique selon l'invention est égale à 93 mm et celle du pneumatique de référence est égale à 62 mm. L'angle α formé par la pente de la base du bourrelet avec une direction parallèle à l'axe de rotation est égal à 7°, sur une longueur de ladite base de l'ordre de 35 mm. Les essais ont notamment montré qu'une telle pente facilite le montage du pneumatique sur une jante et que comme dit précédemment, il n'a pas été observé de rotation sur jante lors des roulages.

Les pneumatiques ont été testés sur un même véhicule, celui-ci circulant sur le même tracé simulant un parcours très pénalisant pour les pneumatiques et conduit par le même conducteur. Le parcours, qui reproduit l'utilisation d'un véhicule circulant dans des mines souterraines, comporte notamment des phases sur des distances courtes de marche avant et marche arrière, des démarrages avant et arrière imposant des passages de couple important depuis une vitesse nulle et des phases de roulage sur des distances plus longues comportant des passages en courbes.

Les essais ont confirmé après des roulages sur une durée de 200 heures que les pneumatiques selon l'invention ne présente pas de dégradation dans les zones des bourrelets alors que les pneumatiques de référence laissent apparaître un endommagement desdites zones des bourrelets pouvant nécessiter un remplacement du pneumatique.

## Revendications

1. Pneumatique (1) pour véhicule lourd, à armature de carcasse radiale, constituée d'au moins une couche (2) d'éléments de renforcement, ledit pneumatique comprenant une armature de sommet (6), elle-même coiffée radialement d'une bande de roulement (7), ladite bande de roulement étant réunie à deux bourrelets (3) par l'intermédiaire de deux flancs (8), chacun des bourrelets comportant une tringle (4) permettant l'ancrage de l'armature de carcasse dans lesdits bourrelets par retournement de ladite au moins une couche d'éléments de renforcement autour des tringles, et dans un plan radial, radialement à l'intérieur du point (E) de ladite au moins une couche (2) d'armature de carcasse radialement le plus à l'intérieur et axialement à l'extérieur du centre géométrique (C) de la tringle (4), le rayon de courbure en un point (R) de la surface extérieure (9) du bourrelet (3) étant supérieur au rayon de courbure au point (S) de projection orthogonale dudit point (R) de la surface extérieure (9) du bourrelet sur ladite au moins une couche (2) d'armature de carcasse, les tringles (4) étant des tringles paquets, de préférence de forme hexagonale, les tringles (4) présentant un rapport de largeur axiale (L) sur hauteur radiale (H) supérieur à 1.5, **caractérisé en ce que**, sur au moins 30 mm de la base du bourrelet (3), l'angle (α) formé par ladite base avec une direction parallèle à celle de l'axe de rotation du pneumatique est compris entre 6 et 7.5°.

2. Pneumatique (1) selon la revendication 1, **caractérisé en ce que**, dans un plan radial, radialement à l'intérieur du point (G) de la tringle (4) radialement le plus à l'intérieur et axialement à l'extérieur du centre géométrique (C) de la tringle (4), le rayon de courbure en un point (U) de ladite au moins une couche (2) d'armature de carcasse est inférieur au rayon de courbure au point (V) de projection orthogonale dudit point (U) de ladite au moins une couche (2) d'armature de carcasse sur la surface extérieure (9) du bourrelet (3).

3. Pneumatique (1) selon l'une des revendications 1 ou 2, **caractérisé en ce que** l'épaisseur radiale de masse caoutchouteuse mesurée entre la tringle, de préférence radialement à l'intérieur du point (G) de la tringle radialement le plus à l'intérieur, et la surface extérieure (9) du bourrelet (3) est supérieure à 10 mm.

4. Pneumatique (1) selon l'une des revendications précédentes, **caractérisé en ce qu'**il présente une largeur supérieure ou égale à 25 pouces.

## Patentansprüche

1. Schwerfahrzeug-Luftreifen (1) mit radialer Karkassenbewehrung, die aus mindestens einer Schicht (2) von Verstärkungselementen besteht, wobei der Luftreifen eine Scheitelbewehrung (6) enthält, die selbst radial von einem Laufstreifen (7) überdeckt wird, wobei der Laufstreifen mit Hilfe von zwei Flanken (8) mit zwei Wülsten (3) vereint wird, wobei jeder der Wülste einen Wulstkern (4) aufweist, der die Verankerung der Karkassenbewehrung in den Wülsten durch Umschlag der mindestens einen Schicht von Verstärkungselementen um die Wulstkerne erlaubt, und in einer radialen Ebene radial innen bezüglich des Punkts (E) der mindestens einen Karkassenbewehrungsschicht (2), der radial am weitesten innen und axial außen bezüglich der geometrischen Mitte (C) des Wulstkerns (4) liegt, der Krümmungsradius an einem Punkt (R) der Außenfläche (9) des Wulsts (3) größer als der Krümmungsradius am Punkt (S) der orthogonalen Projektion des Punkts (R) der Außenfläche (9) des Wulsts auf die mindestens eine Karkassenbewehrungsschicht (2) ist, wobei die Wulstkerne (4) Paketwulstkerne von vorzugsweise Sechseckform sind, wobei die Wulstkerne (4) ein Verhältnis der axialen Breite (L) zur radialen Höhe (H) größer als 1,5 aufweisen, **dadurch gekennzeichnet, dass** über mindestens 30 mm der Basis des Wulsts (3) der von der Basis mit einer Richtung parallel zu derjenigen der Drehachse des Luftreifens geformte Winkel (α) zwischen 6 und 7,5° liegt.

2. Luftreifen (1) nach Anspruch 1, **dadurch gekennzeichnet, dass** in einer radialen Ebene radial innen bezüglich des Punkts (G) des Wulstkerns (4), der radial am weitesten innen und axial außen bezüglich der geometrischen Mitte (C) des Wulstkerns (4) liegt, der Krümmungsradius an einem Punkt (U) der mindestens einen Karkassenbewehrungsschicht (2) geringer als der Krümmungsradius am Punkt (V) der orthogonalen Projektion des Punkts (U) der mindestens einen Karkassenbewehrungsschicht (2) auf die Außenfläche (9) des Wulsts (3) ist.

3. Luftreifen (1) nach einem der Ansprüche 1 oder 2, **dadurch gekennzeichnet, dass** die radiale Dicke der Kautschukmasse gemessen zwischen dem Wulstkern, vorzugsweise radial innen bezüglich des radial am weitesten innen liegenden Punkts (G) des Wulstkerns, und der Außenfläche (9) des Wulsts (3) größer als 10 mm ist.

4. Luftreifen (1) nach einem der vorhergehenden Ansprüche, **dadurch gekennzeichnet, dass** er eine Breite größer als oder gleich 25 Zoll hat.

## Claims

1. - Tyre (1) for a heavy vehicle, with a radial carcass reinforcement, consisting of at least one layer (2) of reinforcing elements, the said tyre comprising a crown reinforcement (6) itself radially capped by a tread (7), the said tread being connected to two beads (3) by two sidewalls (8), each of the beads comprising a bead wire (4) for anchoring the carcass reinforcement into the said beads by wrapping the said at least one layer of reinforcing elements around the bead wires, and in a radial plane, radially on the inside of the radially innermost point (E) of the said at least one layer (2) of carcass reinforcement and axially on the outside of the geometric centre (C) of the bead wire (4), the radius of curvature at a point (R) on the exterior surface (9) of the bead (3) being greater than the radius of curvature at the point (S) of orthogonal projection of the said point (R) of the exterior surface (9) of the bead onto the said at least one layer (2) of carcass reinforcement, the bead wires (4) being bead bundles, preferably of hexagonal shape, the bead wires (4) having a ratio of axial width (L) to radial height (H) greater than 1.5, **characterized in that**, over at least 30 mm of the base of the bead (3), the angle (α) formed by the said base with a direction parallel to the direction of the axis of rotation of the tyre is comprised between 6 and 7.5°.

2. - Tyre (1) according to Claim 1, **characterized in that**, in a radial plane, radially on the inside of the radially innermost point (G) of the bead wire (4) and axially on the outside of the geometric centre (C) of the bead wire (4), the radius of curvature at a point (U) on the said at least one layer (2) of carcass reinforcement is smaller than the radius of curvature at the point (V) of orthogonal projection of the said point (U) of the said at least one layer (2) of carcass reinforcement on the exterior surface (9) of the bead (3).

3. - Tyre (1) according to one of Claims 1 or 2, **characterized in that** the radial thickness of rubber mass measured between the bead wire, preferably radially on the inside of the radially innermost point (G) of the bead wire, and the exterior surface (9) of the bead (3) is greater than 10 mm.

4. - Tyre (1) according to one of the preceding claims, **characterized in that** it has a width greater than or equal to 25 inches.
